# EUROPEAN PATENT APPLICATION

(11) **EP 4 825 639 A1**
(43) Date of publication of application: **21.10.2026**
(21) Application number: 26167107.7
(22) Date of filing: 24.03.2026
(51) Int. Cl.: B60L 15/20, B60L 3/00, B60L 3/10

(54) **DOMAIN CONTROL-INTEGRATED MOTOR CONTROL UNIT, POWERTRAIN, AND ELECTRIC VEHICLE**

(30) Priority: 18.04.2025 CN 202510497176
(71) Applicant: HUAWEI TECHNOLOGIES CO., LTD., Shenzhen, Guangdong 518129 (CN)
(72) Inventor: LI, Ying, Shenzhen, Guangdong 518129 (CN); CHEN, Zhiyin, Shenzhen, Guangdong 518129 (CN)
(74) Representative: Maiwald GmbH

(57) **Abstract**

This application provides a domain control-integrated motor control unit, a powertrain, and an electric vehicle. The motor control unit is configured to control operation of the electric vehicle based on signals from a plurality of sensors of the electric vehicle, and the motor control unit includes a housing and an inverter circuit and a control circuit that are accommodated in the housing. The control circuit is configured to: receive, from an accelerator pedal sensor interface on a surface of the housing through an internal line, an accelerator pedal signal from an accelerator pedal sensor, and control, based on an accelerator pedal opening indicated by the accelerator pedal signal, the inverter circuit to output an alternating current to a drive motor; and receive, from a braking pedal sensor interface on the surface of the housing through the internal line, a braking pedal signal from a braking pedal sensor, and control, based on a braking pedal opening indicated by the braking pedal signal, four wheel-end braking apparatuses to brake four wheels of the electric vehicle. This can shorten a drive control delay, and can also implement collaborative control on drive and braking, thereby helping improve handling performance of the electric vehicle.

## Description

### TECHNICAL FIELD

This application relates to the field of vehicles, and in particular, to a domain control-integrated motor control unit, a powertrain, and an electric vehicle.

### BACKGROUND

With further development of electric vehicle electrification, consumers impose a higher requirement on vehicle ride comfort, stable handling performance, and passenger cabin space. Currently, components of an electric vehicle are basically controlled independently, and only a vehicle control unit (vehicle control unit, VCU) performs collaborative control on few functions. An independent braking controller is responsible for longitudinal and lateral control. The vehicle control unit is responsible for longitudinal drive control. During traveling, actuators are basically in an independent working state, and controllers need to separately receive sensor signals and send control signals to the actuators. As a result, a signal delay has great impact, and control precision and coordination are low.

### SUMMARY

This application provides a domain control-integrated motor control unit, a powertrain, and an electric vehicle. Signals of an accelerator pedal sensor and a braking pedal sensor are received by the domain control-integrated motor control unit, and the motor control unit controls drive and braking based on the sensor signals. This can shorten a drive control delay, and can also implement collaborative control on drive and braking, thereby helping improve handling performance of the electric vehicle.

According to a first aspect, a domain control-integrated motor control unit is provided. The motor control unit is configured to control operation of an electric vehicle based on signals from a plurality of sensors of the electric vehicle, and the motor control unit includes a housing and an inverter circuit and a control circuit that are accommodated in the housing. A surface of the housing includes a direct current input interface, an alternating current output interface, an accelerator pedal sensor interface, a braking pedal sensor interface, and a braking control interface, the direct current input interface is configured to connect to a power battery of the electric vehicle, the alternating current output interface is configured to connect to a drive motor of the electric vehicle, the accelerator pedal sensor interface is configured to connect to an accelerator pedal sensor of the electric vehicle, the braking pedal sensor interface is configured to connect to a braking pedal sensor of the electric vehicle, and the braking control interface is configured to connect to four wheel-end braking apparatuses. The inverter circuit is configured to: receive, through the direct current input interface, a direct current output by the power battery, and output an alternating current to the drive motor through the alternating current output interface. The control circuit is configured to: receive, from the accelerator pedal sensor interface through an internal line, an accelerator pedal signal from the accelerator pedal sensor, and control, based on an accelerator pedal opening indicated by the accelerator pedal signal, the inverter circuit to output the alternating current to the drive motor, and the control circuit is further configured to: receive, from the braking pedal sensor interface through the internal line, a braking pedal signal from the braking pedal sensor, and control, based on a braking pedal opening indicated by the braking pedal signal, the four wheel-end braking apparatuses to brake four wheels of the electric vehicle.

It may be understood that the domain control-integrated motor control unit in this application may be any motor control unit in the electric vehicle. This is not limited.

The accelerator pedal in this application is also referred to as a throttle pedal or an acceleration pedal. The accelerator pedal opening indicates a magnitude of a driving force required by a driver. A larger accelerator pedal opening indicates a higher drive requirement of the driver, and larger corresponding torque that needs to be output by the drive motor. The control circuit controls, based on the accelerator pedal opening, the drive motor to output the torque indicated by the accelerator pedal opening. A larger accelerator pedal opening indicates larger torque output by the drive motor, and a smaller accelerator pedal opening indicates smaller torque output by the drive motor. Specifically, the control circuit may control, by adjusting an electrical parameter of the alternating current output by the inverter circuit, the torque output by the drive motor to change with the accelerator pedal opening.

The braking pedal in this application is also referred to as a brake or a brake pedal. The braking pedal opening indicates a magnitude of a braking force required by the driver. A larger braking pedal opening indicates a higher braking requirement of the driver, and larger torque that needs to be output by a braking system. When the vehicle is in a normal traveling process, the domain control-integrated motor control unit controls, based on the braking pedal opening, the wheel-end braking apparatuses to output the torque indicated by the braking pedal opening. A larger braking pedal opening indicates a larger braking force output by the wheel-end braking apparatus, and a smaller braking pedal opening indicates a smaller braking force output by the wheel-end braking apparatus. The braking force output by the wheel-end braking apparatus changes with the braking pedal opening. The electric vehicle includes a plurality of wheel-end braking apparatuses, and each wheel corresponds to at least one wheel-end braking apparatus. The wheel-end braking apparatus is configured to output a braking force to a corresponding wheel to brake the electric vehicle.

The domain control-integrated motor control unit is connected to the accelerator pedal sensor through the accelerator pedal sensor interface on the surface of the housing, and is connected to the braking pedal sensor through the braking pedal sensor interface. Specifically, the control circuit in the domain control-integrated motor control unit may receive, through the accelerator pedal sensor interface, the accelerator pedal signal transmitted from the accelerator pedal sensor through the internal line, and may further receive, through the braking pedal sensor interface, the braking pedal signal transmitted from the braking pedal sensor through the internal line. The accelerator pedal signal from the accelerator pedal sensor indicates the accelerator pedal opening, and the braking pedal signal from the braking pedal sensor indicates the braking pedal opening.

The domain control-integrated motor control unit is connected to the four wheel-end braking apparatuses of the electric vehicle through the braking control interface on the surface of the housing, so that the control circuit in the domain control-integrated motor control unit may send a control signal to some or all of the four wheel-end braking apparatuses through the braking control interface, to control the wheel-end control apparatus to output a braking force.

The surface of the housing of the domain control-integrated motor control unit may further include a drive control interface, and the drive control interface is configured to connect to another motor control unit of the electric vehicle. The control circuit is further configured to output a torque signal to the another motor control unit through the drive control interface, so that the another motor control unit controls another drive motor of the electric vehicle to output torque indicated by the torque signal.

In a traveling process of the electric vehicle, the control circuit in the motor control unit may determine a wheel speed of the wheel by using a rotary transformer of the drive motor, and then observe a road adhesion status based on the wheel speed of the wheel, so that when the electric vehicle travels on a wet and slippery, icy, or bumpy road, without waiting for a torque adjustment instruction of a vehicle control unit, the motor control unit may adjust, based on an observation result, an electrical parameter of an alternating current output to the drive motor, to adjust torque output of the drive motor in time, thereby improving traveling safety and stability of the vehicle. Because the rotary transformer can accurately detect a position, a direction, and a speed of a motor rotor and is directly communicatively connected to the motor control unit, and a communication link is short, the vehicle wheel speed measured by using the rotary transformer can improve measurement precision, reliability, and real-time performance, and can ensure excellent driving performance.

Further, the domain control-integrated motor control unit in this application is connected to the accelerator pedal sensor and the braking pedal sensor, and is used as a computing center to integrate control on a drive system and the braking system of the electric vehicle. Therefore, in a traveling scenario in which the electric vehicle requires cooperation between the drive system and the braking system, for example, intelligent driving, drifting, or bumpy road traveling, the motor control unit may jointly control the drive motor and the wheel-end braking apparatus, and coordinately adjust the torque output by the drive motor and the braking force of the wheel-end braking apparatus, so that a force on a tire of the electric vehicle in a traveling process is closer to a friction circle limit, thereby expanding a boundary of a friction force available range, and improving handling performance.

It may be understood that, in an architecture in which a plurality of controllers, for example, the vehicle control unit and a controller in the braking system (for example, a central controller in an electro-mechanical braking (electro-mechanical braking, EMB) system), respectively control the drive system and the braking system, different controllers need to separately perform calculation after obtaining a sensor signal, and separately send a control signal to an actuator. Because processing times of the independent controllers are different and signal sending times of the independent controllers are different, an error may exist in cooperation between a plurality of actuators, and consequently, control precision of the electric vehicle is low. In addition, each actuator independently controls and interacts with another domain, and consequently, there are too many communication nodes, and redundancy design is complex. Moreover, different controllers may repeatedly read and use a same sensor signal, and separately perform vehicle status resolving and estimation in respective controllers. This causes an increase in a calculation amount and a waste of existing hardware resources. In comparison, integrating control on the drive system and the braking system into the domain control-integrated motor control unit can omit reading and calculation of a sensor signal and transmission of a control signal to the motor control unit by the vehicle control unit, so that control on the drive system is independently completed by the motor control unit. In addition, the motor control unit may replace the central controller to control the braking system, thereby reducing communication nodes. In addition, the domain control-integrated motor control unit may further perform collaborative control on the drive system and the braking system based on a plurality of sensor signals. This helps reduce a cooperation error between the plurality of actuators caused by a difference in sending time of control signals, thereby improving control precision of the electric vehicle.

According to the solution of this application, signals of the accelerator pedal sensor and the braking pedal sensor are received by the domain control-integrated motor control unit, and the motor control unit controls drive and braking based on the sensor signals. This can shorten a drive control delay, and can also implement collaborative control on drive and braking, thereby helping improving control precision of the electric vehicle.

With reference to the first aspect, in some implementations, the braking control interface is configured to connect to the four wheel-end braking apparatuses through at least two internal controller area network buses. The domain control-integrated motor control unit 40 is connected to each wheel-end braking apparatus through the at least two groups of internal controller area network buses, and the internal controller area network buses can be increased to three or four internal controller area network buses based on an actual communication load rate. In another implementation, another high-speed communication manner may be used for a connection.

According to the solution of this application, when one internal controller area network bus fails, another controller area network bus may be used to maintain a connection between the motor control unit 40 and the four wheel-end braking apparatuses, and maintain control of the motor control on the braking system.

With reference to the first aspect, in some implementations, the accelerator pedal sensor interface is configured to receive at least two accelerator pedal signals from the accelerator pedal sensor, and the braking pedal sensor interface is configured to receive at least two braking pedal signals from the braking pedal sensor. It may be understood that the accelerator pedal sensor usually outputs two sensor signals, and the motor control unit may receive the two output accelerator pedal signals. The braking pedal sensor also outputs two sensor signals, and the motor control unit may receive the two output braking pedal signals.

It may be understood that, in this application, a signal output by a sensor, for example, the accelerator pedal signal or the braking pedal signal, is a single edge nibble transmission (single edge nibble transmission, SENT) signal, an analog voltage signal, an analog current signal, or the like.

According to the solution of this application, a plurality of sensors are disposed on an accelerator pedal and a braking pedal to output sensor signals, to implement hardware redundancy, and effectively improve reliability and safety of electric vehicle control.

With reference to the first aspect, in some implementations, the surface of the housing further includes a height sensor interface and a suspension control interface, the height sensor interface is configured to connect to a height sensor of the electric vehicle, and the suspension control interface is configured to connect to a suspension system of the electric vehicle. The control circuit is further configured to control, based on a vehicle body height indicated by the height sensor, the suspension system to adjust suspension damping.

The suspension system is configured to connect a vehicle body of the electric vehicle to the wheels, and provide support, buffering, and stability in a traveling process of the electric vehicle. The suspension system includes a shock absorber. Each wheel is separately connected to the vehicle body of the electric vehicle through the shock absorber. For the suspension system with an adjustable damping shock absorber, the controller sends a target damping coefficient or a target damping level to the suspension system, to adjust damping of each shock absorber. The suspension system includes an air suspension or a fully active suspension. The controller sends a target wheel suspension height to the suspension system, to adjust a suspension height at the wheel of the electric vehicle.

According to the solution of this application, the domain control-integrated motor control unit further receives a signal of the height sensor, and the motor control unit has higher integration. In addition, the motor control unit may further implement joint control on drive, braking, and suspension based on the signal of the height sensor, to further improve handling performance of the electric vehicle.

With reference to the first aspect, in some implementations, the surface of the housing further includes a steering control interface, and the steering control interface is configured to connect to a rear-wheel steering system of the electric vehicle. The control circuit is further configured to control, through the steering control interface, the rear-wheel steering system to adjust a steering angle of a rear wheel of the electric vehicle.

The rear-wheel steering system of the electric vehicle can control rear-wheel steering. The rear-wheel steering system may change rotation angles and orientations of two rear wheels, so that the electric vehicle may effectively adjust steering and handling characteristics of the electric vehicle in different steering manners. When a vehicle speed is low and a steering direction of the rear wheel is opposite to a steering direction of the front wheel, a turning radius may be reduced, to improve overall handling and flexibility of the vehicle. When the vehicle speed is high and the steering direction of the rear wheel is the same as the steering direction of the front wheel, vehicle yaw torque generated by a steering operation may be effectively reduced, to enhance traveling stability of the vehicle.

In this application, the control circuit of the domain control-integrated motor control unit may control, through the steering control interface, the rear-wheel steering system of the electric vehicle to adjust the steering angle of the rear wheel of the electric vehicle. In cooperation with control on drive, braking and suspension, control on rear-wheel steering is integrated together. This can improve control performance and comfort of the electric vehicle more effectively.

According to the solution of this application, signals of a plurality of sensors are received by the domain control-integrated motor control unit, and the motor control unit controls drive, braking, suspension, and steering based on the signals. This results in high integration and quick real-time response, and improves control performance and comfort of the electric vehicle.

With reference to the first aspect, in some implementations, the surface of the housing further includes a parking switch interface and a parking control interface. The parking switch interface is configured to connect to an electronic parking braking system switch of the electric vehicle. The parking control interface is configured to connect to the electronic parking braking system switch of the electric vehicle. The control circuit controls, through the parking control interface, an electronic parking braking system of the electric vehicle to output a parking braking force.

In this application, the surface of the housing of the domain control-integrated controller includes the parking switch interface, and the control circuit is connected to the electronic parking braking system switch of the electric vehicle through the parking switch interface. The electronic parking braking system switch is configured to control the electronic parking system of the electric vehicle, and the driver may perform parking braking by using the electronic parking braking system switch. The surface of the housing of the domain control-integrated controller further includes the parking control interface, and the control circuit is configured to control the electronic parking braking system through the parking control interface. When the electronic parking braking system switch indicates that the electric vehicle needs to be parked, the control circuit controls the electronic parking braking system to output the parking braking force.

According to the solution of this application, the electronic parking braking system switch is connected to the domain control-integrated motor control unit, and the motor control unit may control parking to be performed, thereby improving integration of the motor control unit.

With reference to the first aspect, in some implementations, the motor control unit further includes a standby control circuit accommodated in the housing, and the standby control circuit is configured to: when the control circuit fails, replace the control circuit to perform at least one of the following: controlling the inverter circuit to output the alternating current to the drive motor, controlling the four wheel-end braking apparatuses to brake the four wheels of the electric vehicle, controlling the suspension system of the electric vehicle to adjust the suspension damping, or controlling the rear-wheel steering system of the electric vehicle to adjust the steering angle of the rear wheel of the electric vehicle.

That is, one control circuit used as a main control and one standby control circuit used as a standby control may be disposed in the domain control-integrated motor control unit. When the control circuit is functional, the control circuit may control the drive system, the braking system, the rear-wheel steering system, and the suspension system of the electric vehicle based on received sensor signals. When the control circuit fails, the standby control circuit may take over the control circuit to send a control instruction to a lower-layer actuator. For a specific manner of performing calculation and control by the standby control circuit, refer to related content of the control circuit. Details are not described herein again.

In these embodiments, the standby control circuit is connected to at least the braking pedal sensor, so that when the control circuit is faulty, the standby control circuit can control the braking system to operate normally, thereby ensuring safety of the electric vehicle. Further, based on actual chip resources and costs, the standby control circuit may further be connected to one or more of the following: the accelerator pedal sensor, a vehicle body acceleration sensor, the height sensor, and a wheel speed sensor, to control the drive motor, the suspension system, the rear-wheel steering system, and the like in the electric vehicle. It is easy to understand that when sufficient chip resources are distributed to the standby control circuit, the standby control circuit may implement full redundancy for the control circuit, resulting in higher safety of the electric vehicle.

According to the solution of this application, the standby control circuit may be used as hardware redundancy of the control circuit. When the control circuit is faulty, the standby control circuit takes over control, and sends a control instruction to the actuator, to help further improve safety of the vehicle.

With reference to the first aspect, in some implementations, the standby control circuit is further configured to connect to the braking pedal sensor interface through an internal line, to receive at least two braking pedal signals from another braking pedal sensor of the electric vehicle through the braking pedal sensor interface.

It may be understood that the standby control circuit may receive, through the braking pedal sensor interface, the at least two braking pedal signals from the another braking pedal sensor. Alternatively, a separate interface may be provided on the surface of the housing, and the standby control circuit may receive, through the separate interface, the at least two braking pedal signals from the another braking pedal sensor.

According to the solution of this application, the electric vehicle includes two braking pedal sensors that are backups for each other. In this way, the two braking pedal sensors can more accurately detect a motion status of the braking pedal. In addition, if one of the braking pedal sensors fails, the other braking pedal sensor can still independently detect the motion status of the braking pedal and transmit the motion status to the control circuit in the motor control unit, thereby ensuring normal operation of the braking system and safety of the electric vehicle.

With reference to the first aspect, in some implementations, the control circuit is further configured to connect to the standby control circuit through at least two internal lines, to exchange a signal from a sensor of the electric vehicle with the control circuit through the at least two internal lines.

The signals from the sensors of the electric vehicle that are exchanged between the control circuit and the standby control circuit include some or all signals from the accelerator pedal sensor, the braking pedal sensor, the vehicle body acceleration sensor, the height sensor, and the wheel speed sensor.

It may be understood that the standby control circuit may alternatively not be connected to a sensor, but receives, through the control circuit, a signal from each sensor of the electric vehicle. Specifically, after receiving a sensor signal, the control circuit may transmit the sensor signal to the standby control circuit, so that the standby control circuit may obtain one or more sensor signals. In this way, the standby control circuit does not need to be connected to the plurality of sensor interfaces on the surface of the housing through an additional line. This helps reduce structural complexity.

It may be understood that a specific manner of signal exchange between the control circuit and the standby control circuit is not limited in this embodiment of this application. The control circuit and the standby control circuit may be integrated into a same printed circuit board (Printed Circuit Board, PCB). In this case, the control circuit may perform signal exchange with the standby control circuit through a metal wire, a via, optical transmission, or the like on the PCB. For another example, the control circuit and the standby control circuit may be disposed on different PCBs. In this case, the control circuit and the standby control circuit may perform signal exchange through a flat cable connected to two PCBs, or perform signal exchange through a wireless communication module on the PCB.

According to the solution of this application, the control circuit and the standby control circuit may exchange, through the internal line, received sensor signals of the vehicle, so that the sensor signals received by the control circuit and the standby control circuit are backups for each other, thereby improving reliability and accuracy of control performed by the motor control unit.

With reference to the first aspect, in some implementations, in response to the control circuit being functional and the braking pedal sensor being functional, the control circuit is configured to control, based on the braking pedal opening indicated by the braking pedal sensor, the four wheel-end braking apparatuses to brake the four wheels of the electric vehicle. In response to the control circuit being functional, the braking pedal sensor failing, and the another braking pedal sensor being functional, the control circuit is configured to: receive a braking pedal signal from the standby control circuit, and control, based on a braking pedal opening indicated by the braking pedal signal, the four wheel-end braking apparatuses to brake the four wheels of the electric vehicle.

According to the solution of this application, when the braking pedal sensor fails, because the control circuit may receive, through the standby control circuit, the braking pedal signal from the another braking pedal sensor, the control circuit can still control, based on the braking pedal opening indicated by the braking pedal signal, the four wheel-end braking apparatuses to output the braking force corresponding to the braking pedal opening.

With reference to the first aspect, in some implementations, in response to failures of both the braking pedal sensor and the another braking pedal sensor and a decrease in the accelerator pedal opening indicated by the accelerator pedal sensor, the control circuit controls the four wheel-end braking apparatuses to output the braking forces to the four wheels, where the braking forces increase as the accelerator pedal opening decreases.

It may be understood that, after both the braking pedal sensor and the another braking pedal sensor fail, if the accelerator pedal opening indicated by the accelerator pedal sensor decreases, it may be considered that the driver starts to release an acceleration pedal. In this case, the motor control unit may control the four wheel-end braking apparatuses to output the braking forces, to assist the electric vehicle in gradually decelerating until braking. That is, even if the braking pedal sensors of the electric vehicle fail, the driver may control, by controlling the accelerator pedal, the four wheel-end braking apparatuses to brake the four wheels of the electric vehicle.

According to the solution of this application, in a scenario in which the braking pedal sensors configured for the electric vehicle both fail, the domain control-integrated motor control unit can still control, based on a decrease degree of the accelerator pedal opening, the four wheel-end apparatuses to output the braking forces, thereby avoiding a risk of a braking failure caused by failures of the braking pedal sensors, and improving safety and reliability of the electric vehicle.

With reference to the first aspect, in some implementations, in response to the braking pedal opening being greater than zero and less than a preset opening, the control circuit controls the drive motor to stop outputting torque, and controls, by using the braking pedal, the four wheel-end braking apparatuses to output the braking forces to the four wheels. In response to the braking pedal opening being greater than the preset opening, the control circuit controls, based on the braking pedal opening, the drive motor to output reverse torque, and controls the four wheel-end braking apparatuses to output the braking forces to the four wheels, where a torque direction of the reverse torque is opposite to a rotation direction of the wheel.

The preset opening may be understood as a small braking pedal opening, and the braking pedal opening being less than the preset opening may be understood as that the driver has a low braking requirement for the electric vehicle. Therefore, when the opening of the braking pedal that the driver steps on is less than the preset opening, the control circuit of the motor control unit may control the drive motor to stop outputting torque, and output the corresponding braking force based on the braking pedal opening, to implement quick braking of the electric vehicle.

The braking pedal opening being greater than the preset opening may be understood as that the driver has a high braking requirement for the electric vehicle. Therefore, when the opening of the braking pedal stepped by the driver is greater than the preset opening, when controlling the four wheel-end braking apparatuses to output the braking forces, the control circuit of the motor control unit may control the drive motor to output the reverse torque to assist the braking system in braking the wheels of the electric vehicle. Under a joint action of the reverse torque output by the drive motor and braking torque output by a corresponding wheel-end braking apparatus, braking forces that are of the wheels and that correspond to the braking pedal opening can be achieved quickly. It is easy to understand that the control circuit may flexibly configure a value of the reverse torque output by the drive motor and a proportion of the braking torque output by the wheel-end braking apparatus in total torque corresponding to the braking pedal opening. This is not limited in this embodiment of this application.

According to the solution of this application, the domain control-integrated motor control unit may enable, through collaborative control on the drive system and the braking system, the electric vehicle to quickly output the braking force corresponding to the braking pedal opening, thereby helping improve safety and handling performance of the electric vehicle.

With reference to the first aspect, in some implementations, the motor control unit further includes a motor control circuit accommodated in the housing. The control circuit is specifically configured to send a drive control signal to the motor control circuit based on the accelerator pedal opening indicated by the accelerator pedal sensor, and the drive control signal indicates a magnitude and a frequency of the alternating current. The motor control circuit is configured to control, based on the drive control signal, the inverter circuit to output the alternating current to the drive motor.

In other words, the domain control-integrated motor control unit provided in this embodiment of this application may include the independent control circuit and the independent motor control circuit. The control circuit is configured to receive a sensor signal in the electric vehicle and is used as a computing center to control drive, braking, suspension, and the like. The motor control circuit is used as an execution unit to receive the drive control signal output by the control circuit and control torque of the drive motor by controlling the inverter circuit.

It may be understood that a separate motor control circuit may not be disposed in the motor control unit, that is, the motor control circuit may be integrated into the control circuit, so that the control circuit may be used as the computing center and may also be used as an execution unit to directly control torque of the drive motor by controlling the inverter circuit.

According to this embodiment of this application, in the domain control-integrated motor control unit, the control circuit used as the computing center and the motor control circuit used as a drive control execution unit are separately disposed. This helps reduce structural complexity of the control circuit.

With reference to the first aspect, in some implementations, the motor control unit further includes another inverter circuit, the another inverter circuit is configured to: receive, through the direct current input interface, power supplied by the power battery, and output an alternating current to another drive motor of the electric vehicle through the alternating current output interface, and the drive motor and the another drive motor are configured to drive two coaxial wheels of the electric vehicle. The control circuit is further configured to control, based on the accelerator pedal opening indicated by the accelerator pedal sensor, the another inverter circuit to output the alternating current to the another drive motor.

It may be understood that, for a drive system architecture with a distributed powertrain, the domain control-integrated motor control unit may be a dual-motor control unit, and the control circuit may drive, through two internal inverter circuits, two drive motors of the electric vehicle respectively, to drive two front wheels or two rear wheels of the electric vehicle to rotate. Specifically, the control circuit may separately calculate, based on the accelerator pedal opening indicated by the accelerator pedal sensor, torque that needs to be output by the two drive motors, to separately control the two inverter circuits to respectively output alternating currents to the two drive motors. An electrical parameter of the alternating current output by the inverter circuit to the drive motor may be the same as or different from an electrical parameter of the alternating current output by the another inverter circuit to the another drive motor. This is not limited in this embodiment of this application.

According to the solution of this application, the domain control-integrated motor control unit may control the two drive motors of the electric vehicle respectively by using different inverter circuits. In other words, the domain control-integrated motor control unit may be used in a distributed powertrain, and therefore is more practical.

According to a second aspect, a powertrain is provided. The powertrain includes a drive motor and the motor control unit in any implementation of the first aspect, and the motor control unit is configured to: receive power supplied by a power battery and supply power to the drive motor to drive the drive motor.

According to a third aspect, an electric vehicle is provided. The electric vehicle includes wheels, four wheel-end braking apparatuses, and the powertrain in the second aspect. The powertrain is configured to: drive the wheels to rotate, and control the four wheel-end braking apparatuses to output braking forces to the wheels.

With reference to the third aspect, in some implementations, one of the four wheel-end braking apparatuses is further configured to connect to another braking pedal sensor of the electric vehicle. In response to a failure of the motor control unit in the powertrain, the one wheel-end braking apparatus is further configured to control, based on a braking pedal opening indicated by the another braking pedal sensor, the four wheel-end braking apparatuses to brake the four wheels of the electric vehicle.

That is, the motor control unit in the powertrain may be used as a main control of the braking system, and the one wheel-end braking apparatus is used as redundancy of the main control. When the motor control unit used as the main control is normal, the motor control unit used as the main control is responsible for controlling, based on a braking pedal signal output by one braking pedal sensor or a braking pedal signal output by another braking pedal sensor, the four wheel-end braking apparatuses to output the braking forces. When the motor control unit used as the main control fails, the one wheel-end braking apparatus used as a backup may continue to control, based on the braking pedal signal output by the another braking pedal sensor, the four wheel-end braking apparatuses to output the braking forces, thereby avoiding a failure of the entire braking system caused by the failure, and helping improve safety and reliability of the braking system.

Specifically, for beneficial effects of another aspect, refer to the beneficial effects described in the first aspect. Details are not described herein again.

### BRIEF DESCRIPTION OF DRAWINGS

FIG. 1 is a diagram of an electric vehicle according to an embodiment of this application;
FIG. 2 is a diagram of an architecture of an electric vehicle according to an embodiment of this application;
FIG. 3 is a diagram of a domain control-integrated motor control unit 40 according to an embodiment of this application;
FIG. 4 is a connection diagram of a domain control-integrated motor control unit 40 according to an embodiment of this application;
FIG. 5 is another diagram of a domain control-integrated motor control unit 40 according to an embodiment of this application;
FIG. 6 is still another diagram of a domain control-integrated motor control unit 40 according to an embodiment of this application; and
FIG. 7 is yet another diagram of a domain control-integrated motor control unit 40 according to an embodiment of this application.

### DESCRIPTION OF EMBODIMENTS

The following describes technical solutions of this application with reference to accompanying drawings.

Reference to "some embodiments" or the like described in this specification indicates that one or more embodiments of this application include a specific feature, structure, or characteristic described with reference to embodiments. Therefore, statements such as "in some embodiments" that appear at different places in this specification do not necessarily mean reference to a same embodiment. Instead, the statements mean "one or more but not all of embodiments", unless otherwise specifically emphasized in another manner. The terms "include", "comprise", "have", and their variants all mean "include but are not limited to", unless otherwise specifically emphasized in another manner.

With further development of electric vehicle electrification, consumers impose a higher requirement on vehicle ride comfort, stable handling performance, and passenger cabin space. Currently, components of an electric vehicle are basically controlled independently, and only a vehicle control unit (vehicle control unit, VCU) performs collaborative control on few functions. An independent braking controller is responsible for longitudinal and lateral control. The vehicle control unit is responsible for longitudinal drive control. During traveling, actuators are basically in an independent working state, and controllers need to separately receive sensor signals and send control signals to the actuators. As a result, a signal delay has great impact, and control precision and coordination are low.

In view of the foregoing problem, embodiments of this application provide a domain control-integrated motor control unit, a powertrain, and an electric vehicle. Signals of a plurality of sensors are received by the motor control unit, and the motor control unit controls drive and braking based on the signals. This results in high integration and a high response speed, and can effectively provide control precision and handling performance of the vehicle.

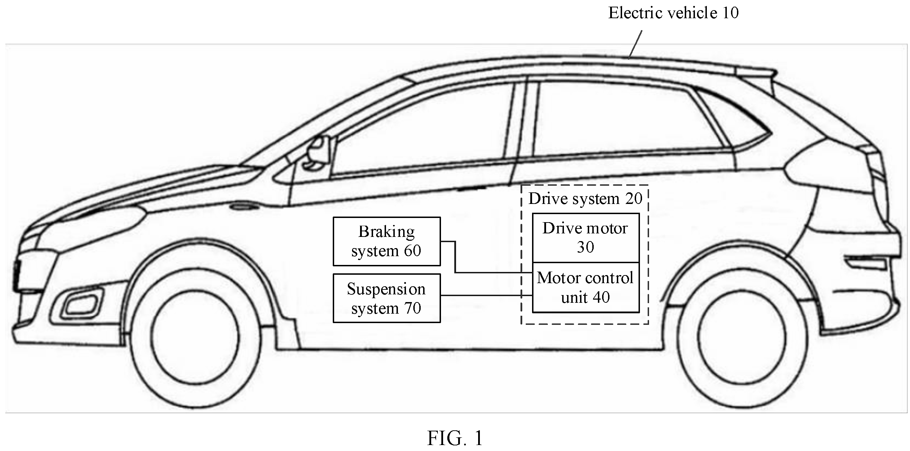

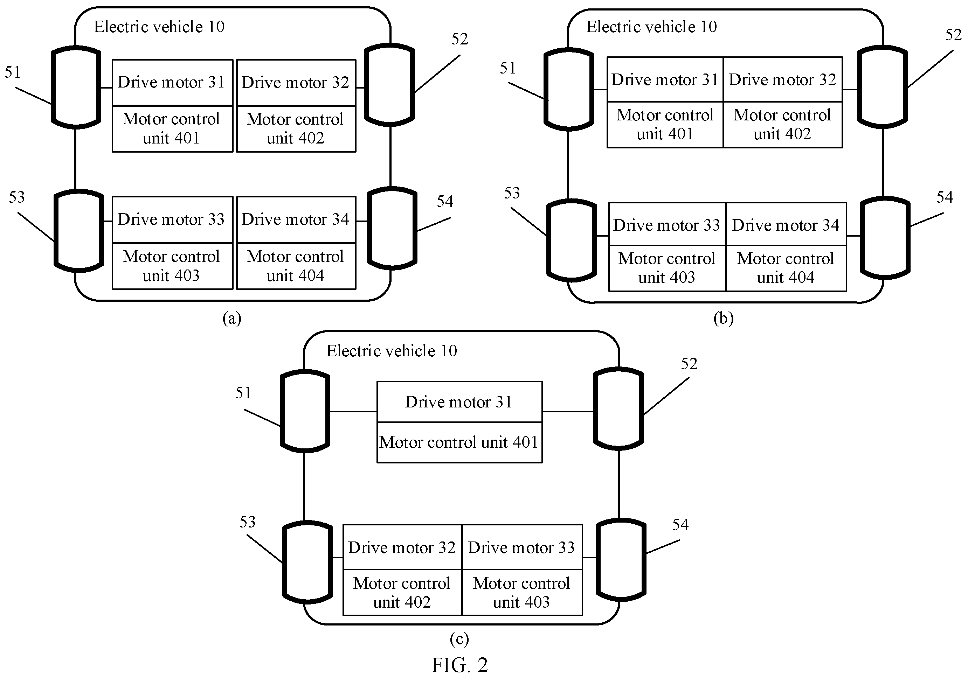

FIG. 1 and FIG. 2 are diagrams of an architecture of an electric vehicle 10 according to an embodiment of this application.

As shown in FIG. 1, the electric vehicle 10 includes a drive system 20, a braking system 60, a suspension system 70, a power battery (not shown in the figure), and a plurality of wheels. The drive system 20 includes a drive motor 30 and a motor control unit 40. The motor control unit 40 is configured to output a current to the drive motor 30 to control the drive motor 30 to output torque to drive the electric vehicle 10. In addition, the motor control unit 40 is further configured to: control the braking system 60 to output a braking force, control the suspension system 70 to adjust suspension damping, and control a steering system to adjust a wheel steering angle of the electric vehicle 10. A specific implementation of the motor control unit 40 is described in detail below. Details are not described herein again.

The electric vehicle 10 provided in this embodiment of this application includes but is not limited to a pure electric vehicle (pure electric vehicle/battery electric vehicle, pure EV/battery EV), a hybrid electric vehicle (hybrid electric vehicle, HEV), a range extended electric vehicle (range extended electric vehicle, REEV), a plug-in hybrid electric vehicle (plug-in hybrid electric vehicle, PHEV), a new energy vehicle (new energy vehicle, NEV), and the like.

In addition, the electric vehicle 10 is of a single-drive-motor drive architecture, a dual-drive-motor drive architecture, a three-drive-motor drive architecture, or a four-drive-motor drive architecture. The electric vehicle 10 may be of a distributed four-drive-motor drive architecture. The drive motor is disposed on an edge of a wheel to be driven and is controlled by a separate motor control unit 40. Alternatively, the electric vehicle 10 may be of a centralized drive motor drive architecture. Drive motors for driving two front wheels or driving two rear wheels are disposed together. There may be one or more motor control units 40. The motor control unit 40 may be in a one-to-one correspondence with the drive motor, or one motor control unit 40 may alternatively correspond to a plurality of drive motors. The motor control unit 40 is configured to control one or more drive motors to output torque to drive the electric vehicle 10.

In an embodiment, as shown in (a) in FIG. 2, the electric vehicle 10 may be of a distributed four-drive-motor drive architecture. The drive motor is disposed on an edge of a wheel to be driven and is controlled by a separate motor control unit. The electric vehicle 10 may alternatively be of a centralized four-motor drive architecture shown in (b) in FIG. 2. Two drive motors for driving the two front wheels or driving the two rear wheels are disposed together.

For example, the electric vehicle 10 includes four motor control units, and the four motor control units include a motor control unit 401, a motor control unit 402, a motor control unit 403, and a motor control unit 404. Four drive motors include a drive motor 31, a drive motor 32, a drive motor 33, and a drive motor 34. The motor control unit 401 controls the drive motor 31 to drive a wheel 51, the motor control unit 402 controls the drive motor 32 to drive a wheel 52, the motor control unit 403 controls the drive motor 33 to drive a wheel 53, and the motor control unit 404 controls the drive motor 34 to drive a wheel 54.

In an embodiment, the electric vehicle 10 may alternatively be of a centralized drive motor architecture shown in (c) in FIG. 2. The two front wheels of the electric vehicle 10 are driven by using one drive motor, and the two rear wheels of the electric vehicle 10 are driven by using two drive motors respectively.

In an embodiment, the plurality of the foregoing mentioned architectures may alternatively be combined. For example, a distributed drive motor architecture is used for front drive, and a centralized drive motor architecture is used for rear drive.

The electric vehicle 10 further includes an accelerator pedal and a braking pedal. The accelerator pedal indicates to output torque to the wheel of the electric vehicle 10. The braking pedal indicates to output a braking force to the wheel of the electric vehicle 10.

In an embodiment, in a driving process of a driver, when the electric vehicle 10 needs to be driven, the driver steps on the accelerator pedal, and the drive system 20 outputs torque based on an accelerator pedal opening, to drive the wheel of the electric vehicle 10.

In an embodiment, the braking system 60 includes four wheel-end braking apparatuses, including a wheel-end braking apparatus 61, a wheel-end braking apparatus 62, a wheel-end braking apparatus 63, and a wheel-end braking apparatus 64. In the driving process of the driver, when the electric vehicle 10 needs to brake, the driver steps on the braking pedal, and the braking system 60 outputs a clamping force to a braking disc based on a braking pedal opening, to generate a friction braking force, so that the electric vehicle 10 brakes.

In an embodiment, the electric vehicle 10 further includes a rear-wheel steering system, and the rear-wheel steering system is configured to control a steering angle of the rear wheel of the electric vehicle 10. The rear-wheel steering system may change rotation angles and orientations of the two rear wheels, so that the vehicle may effectively adjust steering and handling characteristics of the vehicle in different steering manners. When a vehicle speed is low and a steering direction of the rear wheel is opposite to a steering direction of the front wheel, a turning radius may be reduced, to improve overall handling and flexibility of the vehicle. When the vehicle speed is high and the steering direction of the rear wheel is the same as the steering direction of the front wheel, vehicle yaw torque generated by a steering operation may be effectively reduced, to enhance traveling stability of the vehicle. The rear-wheel steering system gives a higher control margin to the vehicle, to improve handling performance and flexibility of the vehicle traveling at a low speed and enhance stability of the vehicle traveling at a high speed, thereby reducing a risk of out-of-control of the vehicle.

In an embodiment, the suspension system 70 of the electric vehicle 10 includes a variable damping shock absorber. The variable damping shock absorber may be a shock absorber that adjusts a damping force by using an electronic control method based on a vehicle traveling status, for example, adjusts the damping force by changing a flow resistance of a fluid inside the shock absorber, to change a response characteristic of the suspension system.

In an embodiment, the suspension system 70 of the electric vehicle 10 includes an air spring, and the suspension system 70 may adjust a vehicle body height through inflating and degassing, to provide comfortable sitting experience and good control performance.

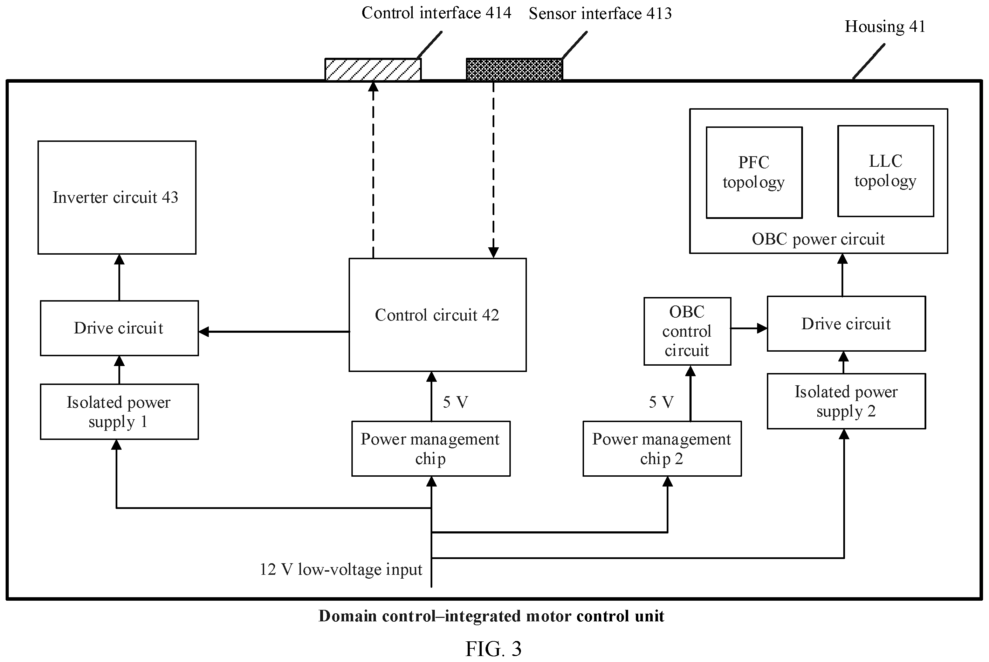

FIG. 3 is a diagram of a domain control-integrated motor control unit 40 according to an embodiment of this application.

As shown in FIG. 3, the motor control unit 40 includes a housing 41 and a control circuit 42 and an inverter circuit 43 that are accommodated in the housing. A surface of the housing 41 includes a direct current input interface 411 (not shown in the figure), an alternating current output interface 412 (not shown in the figure), a plurality of sensor interfaces 413, and a plurality of control interfaces 414. The direct current input interface 411 is configured to connect to a power battery, the alternating current output interface 412 is configured to connect to a drive motor 30, the plurality of sensor interfaces 413 are respectively configured to connect to an accelerator pedal sensor and a braking pedal sensor, and the plurality of control interfaces 414 are configured to respectively connect to four wheel-end braking apparatuses. The inverter circuit 43 is configured to: receive, through the direct current input interface 411, a direct current output by the power battery, and output an alternating current to the drive motor 30 through the alternating current output interface 412.

In this embodiment of this application, the control circuit 42 is configured to control a drive system 20 and a braking system 60 of an electric vehicle 10 based on sensor signals from the accelerator pedal sensor and the braking pedal sensor.

In some embodiments, the plurality of sensor interfaces 413 are further configured to connect to a height sensor, and the control circuit 42 is further configured to control a suspension system 70 of the electric vehicle 10 based on a sensor signal from the height sensor.

It may be understood that connection lines in the figure are merely an example. Each connection line may correspond to a plurality of actual cables, and a plurality of connection lines may also correspond to a combined actual cable.

Still refer to FIG. 3. In some embodiments, the domain control-integrated motor control unit 40 further includes a vehicle-mounted charger control circuit and a vehicle-mounted charger power circuit that are accommodated in the housing. The surface of the housing 41 further includes an alternating current input interface 415 and a direct current output interface 416. The alternating current input interface 415 is configured to connect to an external power supply, and the direct current output interface 416 is configured to connect to a low-voltage load in the electric vehicle 10, including at least one of a low-voltage battery, a light, a wiper, an air conditioner, a sound system, a USB port, a dashboard, a control display, and the like. The low-voltage battery may also supply power to another low-voltage load. The vehicle-mounted charger power circuit is configured to: receive, through the alternating current input interface 415, power supplied by the external power supply; and charge the power battery through the direct current input interface 411; or supply power to the low-voltage load in the electric vehicle 10 through the direct current output interface 416. In an embodiment, the external power supply may be an alternating current power grid, an alternating current charging pile, or an uninterruptible power system (Uninterruptible Power System, UPS). In this case, the external power supply is an alternating current power supply. The vehicle-mounted charger power circuit is configured to: electrically connect to the external power supply and receive an alternating current. The vehicle-mounted charger power circuit converts the received alternating current into a direct current; and transmits the direct current to the power battery through the direct current input interface 411, to supply power to the power battery; or transmits the direct current to the low-voltage load through the direct current output interface 416, to supply power to the low-voltage load. In another embodiment, the vehicle-mounted charger power circuit provided in this application performs conversion on a voltage amplitude or frequency of the received alternating current, and outputs another form of alternating current to supply power to another electrical component that needs to work under the alternating current. The vehicle-mounted charger controller circuit is configured to control a switching transistor in the vehicle-mounted charger power circuit to be turned on or off.

It may be understood that, an accommodation cavity may be formed on the housing 41 of the motor control unit 40. The accommodation cavity is used for enclosure with a cover plate to accommodate electrical components of the control circuit 42, the inverter circuit 43, the vehicle-mounted charger control circuit, and the vehicle-mounted charger power circuit.

In some embodiments, the direct current input interface 411 and the alternating current output interface 412 may be respectively provided on two opposite side walls of the accommodation cavity, so that a power transmission distance of receiving power supplied by the power battery and supplying power to the drive motor by the inverter circuit can be shortened, thereby helping reduce a transmission loss.

In some embodiments, the direct current input interface 411 and the alternating current input interface 415 may be provided on a same side wall of the accommodation cavity. Because the direct current input interface 411 and the alternating current input interface 415 are respectively configured to transmit a high-voltage direct current and a high-voltage alternating current, a larger spacing between the direct current input interface 411 and the alternating current input interface 415 can reduce interference between high-voltage currents.

In some embodiments, the alternating current output interface 412 and the alternating current input interface 415 may be respectively provided on two opposite side walls of the accommodation cavity, so that a layout inside the accommodation cavity can be better planned and optimized. In addition, separately disposing different alternating current interfaces can reduce a risk of crossing between power cables or interference with another connection, thereby helping improve electrical safety of a device and reduce a possibility of electromagnetic interference.

In some embodiments, the alternating current output interface 412 and the direct current output interface 416 may be provided on a same side wall of the accommodation cavity. Because the alternating current output interface 412 is close to the drive motor 30, reducing a spacing between the alternating current output interface 412 and the direct current output interface 416 helps the direct current output interface 416 provide a low-voltage direct current for a component, for example, a rotary transformer, of the drive motor 30.

In some embodiments, in comparison with the direct current input interface 411 and the alternating current output interface 412, the alternating current input interface 415 and the direct current output interface 416 may be provided on two opposite cavity walls with a larger spacing, so that the accommodation cavity has more internal space to accommodate various bridge arm circuits and power supply circuits. In addition, reliability, safety, and usability of the motor control unit 40 can be improved, and a possibility of a misoperation can be reduced, thereby simplifying maintenance and repairing.

In some embodiments, the plurality of sensor interfaces 413 may be provided on a side wall that is of the accommodation cavity and that is different from the side walls on which the direct current input interface 411 and the alternating current output interface 412 are located. For example, the plurality of sensor interfaces 413 may be provided at the bottom of the accommodation cavity, so that the control circuit 42 may be connected to the accelerator pedal sensor, the braking pedal sensor, and the like of the electric vehicle 10 through the plurality of sensor interfaces. For example, the plurality of sensor interfaces 413 may be provided on a side wall that is away from the alternating current input interface 415. In this way, a spacing between the sensor interface 413 and the vehicle-mounted charger power circuit may be large. This helps reduce impact that is of electromagnetic interference generated when the vehicle-mounted charger power circuit works and that is on sensor signals transmitted by the plurality of sensor interfaces.

In some embodiments, the plurality of sensor interfaces 413 and the plurality of control interfaces 414 may be provided on a same side wall of the accommodation cavity, so that an internal controller area network bus for signal transmission may be connected to a same side of the motor control unit 40, and mounting and maintenance difficulty is low. Further, reducing a spacing between the plurality of sensor interfaces 413 and the plurality of control interfaces 414 helps reduce signal interference between a sensor signal and a control signal.

In some embodiments, the plurality of sensor interfaces 413 and the plurality of control interfaces 414 may be provided on two adjacent side walls of the accommodation cavity, so that a layout of different communication ports of the control circuit (or pins of a main control chip in the control circuit) can be better planned and optimized. In addition, separately disposing the sensor interface and the control interface helps reduce interference between a sensor signal and a control signal.

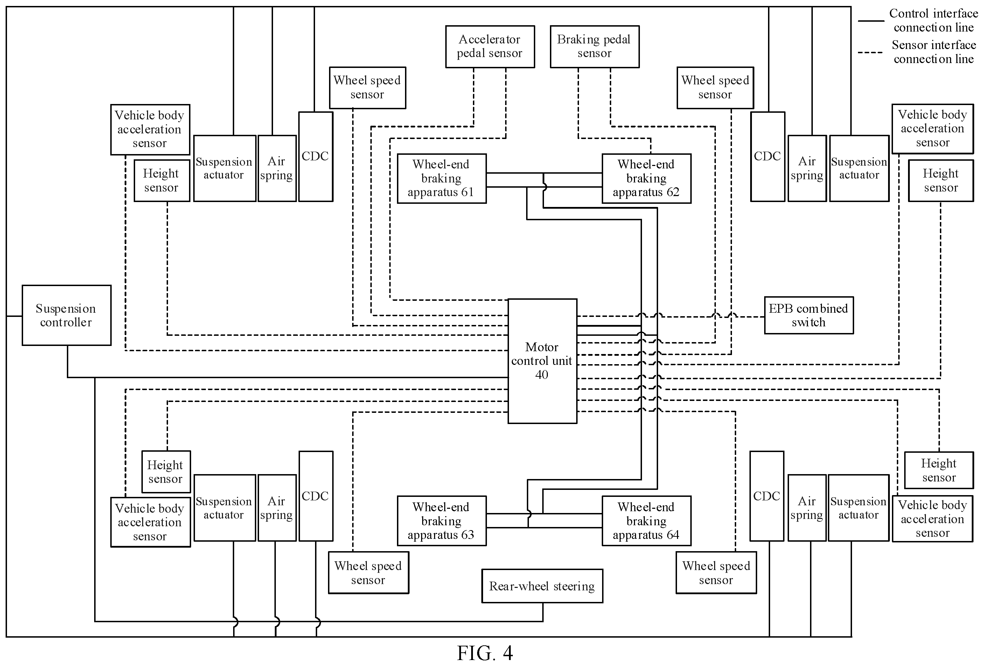

FIG. 4 is a connection diagram of the domain control-integrated motor control unit 40 according to an embodiment of this application.

As shown in FIG. 4, the control circuit 42 of the motor control unit 40 is configured to: receive an accelerator pedal signal from the accelerator pedal sensor through an internal line, and receive a braking pedal signal from the braking pedal sensor through the internal line. The control circuit 42 is configured to: control, based on an accelerator pedal opening indicated by the accelerator pedal signal, the inverter circuit 43 to output the alternating current to the drive motor 30, and control, based on a braking pedal opening indicated by the braking pedal signal, the four wheel-end braking apparatuses to brake four wheels of the electric vehicle.

The domain control-integrated motor control unit 40 is connected to the accelerator pedal sensor through an accelerator pedal sensor interface on the surface of the housing 41, and is connected to the braking pedal sensor through a braking pedal sensor interface. Specifically, the control circuit 42 in the domain control-integrated motor control unit 40 may receive, through the accelerator pedal sensor interface, the accelerator pedal signal transmitted from the accelerator pedal sensor through the internal line, and may further receive, through the braking pedal sensor interface, the braking pedal signal transmitted from the braking pedal sensor through the internal line. The accelerator pedal signal from the accelerator pedal sensor indicates the accelerator pedal opening, and the braking pedal signal from the braking pedal sensor indicates the braking pedal opening.

The accelerator pedal opening indicates a magnitude of a driving force required by a driver. A larger accelerator pedal opening indicates a higher drive requirement of the driver, and larger corresponding torque that needs to be output by the drive motor 30. The motor control unit 40 may directly control, based on the accelerator pedal opening, the drive motor 30 to output the torque indicated by the accelerator pedal opening, without performing torque distribution by using a vehicle control unit. Usually, a larger accelerator pedal opening indicates larger torque that needs to be output by the drive motor 30, and a smaller accelerator pedal opening indicates smaller torque that needs to be output by the drive motor 30. The motor control unit 40 controls the torque output by the drive motor 30 to change with the accelerator pedal opening.

The braking pedal opening indicates a magnitude of a braking force required by the driver. A larger braking pedal opening indicates a higher braking requirement of the driver, and a larger braking force that needs to be output by the braking system 60. When the vehicle is in a normal traveling process, the motor control unit 40 controls, based on the braking pedal opening, the wheel-end braking apparatuses to output the braking force indicated by the braking pedal opening. A larger braking pedal opening indicates a larger braking force that needs to be output by the wheel-end braking apparatus, and a smaller braking pedal opening indicates a smaller braking force that needs to be output by the wheel-end braking apparatus. The braking force output by the wheel-end braking apparatus changes with the braking pedal opening. The electric vehicle 10 includes the four wheel-end braking apparatuses, and each wheel corresponds to at least one wheel-end braking apparatus. The wheel-end braking apparatus is configured to output a braking force to a corresponding wheel to brake the electric vehicle 10.

In this embodiment of this application, the domain control-integrated motor control unit 40 is connected to the four wheel-end braking apparatuses of the electric vehicle 10 through the braking control interface on the surface of the housing 41, so that the control circuit 42 in the domain control-integrated motor control unit 40 may send a braking control signal to some or all of the four wheel-end braking apparatuses through the braking control interface, to control the wheel-end control apparatus to output a braking force. The braking control signal may be a clamping force instruction or a braking force instruction.

In some embodiments, the surface of the housing of the domain control-integrated motor control unit 40 further includes a drive control interface, and the drive control interface is configured to connect to another motor control unit of the electric vehicle 10. The control circuit 42 is further configured to output a torque instruction or a rotation speed instruction to the another motor control unit through the drive control interface, so that the another motor control unit controls another drive motor of the electric vehicle 10 to output corresponding torque according to the torque instruction or the rotation speed signal.

It may be understood that, for any drive system architecture shown in (a) to (c) in FIG. 2, the domain control-integrated motor control unit 40 may perform torque distribution. Specifically, the control circuit 42 of the domain control-integrated motor control unit 40 may output a torque signal to a motor control unit in another powertrain of the electric vehicle 10 through the drive control interface. The torque signal indicates torque that needs to be output by a drive motor in the another powertrain. The domain control-integrated motor control unit 40 may be any one of motor control units in (a) to (c) in FIG. 2. This is not limited in this embodiment of this application.

It may be understood that the domain control-integrated motor control unit 40 may be connected to and exchange a signal with a sensor and an actuator of the electric vehicle 10 through a controller area network (controller area network, CAN) bus, an Ethernet, a local interconnect network (local interconnect network, LIN) bus, a FlexRay (FlexRay), or another type of connection manner.

The domain control-integrated motor control unit 40 is connected to the accelerator pedal sensor and the braking pedal sensor, and is used as a computing center to integrate control on the drive system and the braking system of the electric vehicle 10. In a traveling process of the electric vehicle 10, the motor control unit 40 may determine a wheel speed of the wheel by using the rotary transformer of the drive motor 30, and then observe a road adhesion status based on the wheel speed of the wheel, so that when the electric vehicle 10 travels on a wet and slippery, icy, or bumpy road, without waiting for a torque adjustment instruction of the vehicle control unit, the motor control unit 40 may adjust, based on an observation result, an electrical parameter of an alternating current output to the drive motor, to adjust torque output of the drive motor in time, thereby improving traveling safety and stability of the vehicle. Because the rotary transformer can accurately detect a position, a direction, and a speed of a motor rotor and is directly communicatively connected to the motor control unit, and a communication link is short, the vehicle wheel speed measured by using the rotary transformer can improve measurement precision, reliability, and real-time performance, and can ensure excellent driving performance.

Further, in a traveling scenario in which the electric vehicle 10 requires cooperation between the drive system and the braking system, for example, intelligent driving, drifting, or bumpy road traveling, the domain control-integrated motor control unit 40 may jointly control the drive motor and the wheel-end braking apparatus, and coordinately adjust torque output by the drive motor and the braking force of the wheel-end braking apparatus, so that a force on a tire of the electric vehicle 10 in a traveling process is closer to a friction circle limit, thereby expanding a boundary of a friction force available range, and improving handling performance.

It is easy to understand that, in an architecture in which a plurality of controllers, for example, the vehicle control unit and a central controller in the braking system, respectively control the drive system and the braking system, different controllers separately perform calculation after obtaining a sensor signal, and send a control signal to an actuator. Because processing times of the independent controllers are different and signal sending times of the independent controllers are different, an error may exist in cooperation between a plurality of actuators, and consequently, control precision of the electric vehicle is low. In addition, each actuator independently controls and interacts with another domain, and consequently, there are too many communication nodes, and redundancy design is complex. Moreover, different controllers may repeatedly read and use a same sensor signal, and separately perform vehicle status resolving and estimation in respective controllers. This causes an increase in a calculation amount and a waste of existing hardware resources. In comparison, integrating control on the drive system and the braking system into the domain control-integrated motor control unit 40 can omit reading and calculation of a sensor signal and transmission of a control signal to the motor control unit by the vehicle control unit, so that control on the drive system is independently completed by the motor control unit 40. In addition, the motor control unit 40 may replace the central controller to control the braking system, thereby reducing communication nodes. In addition, the domain control-integrated motor control unit 40 may further perform collaborative control on the drive system and the braking system based on a plurality of sensor signals. This helps reduce a cooperation error between the plurality of actuators caused by a difference in sending time of control signals, thereby improving control precision of the electric vehicle. In addition, the domain control-integrated motor control unit 40 may further reduce a quantity of actuator control boxes, thereby reducing a requirement for a vehicle layout.

According to this embodiment of this application, signals of the accelerator pedal sensor and the braking pedal sensor are received by the domain control-integrated motor control unit 40, and the motor control unit 40 controls drive and braking based on the sensor signals. This can shorten a drive control delay, and can also implement collaborative control on drive and braking, thereby helping improving control precision of the electric vehicle 10.

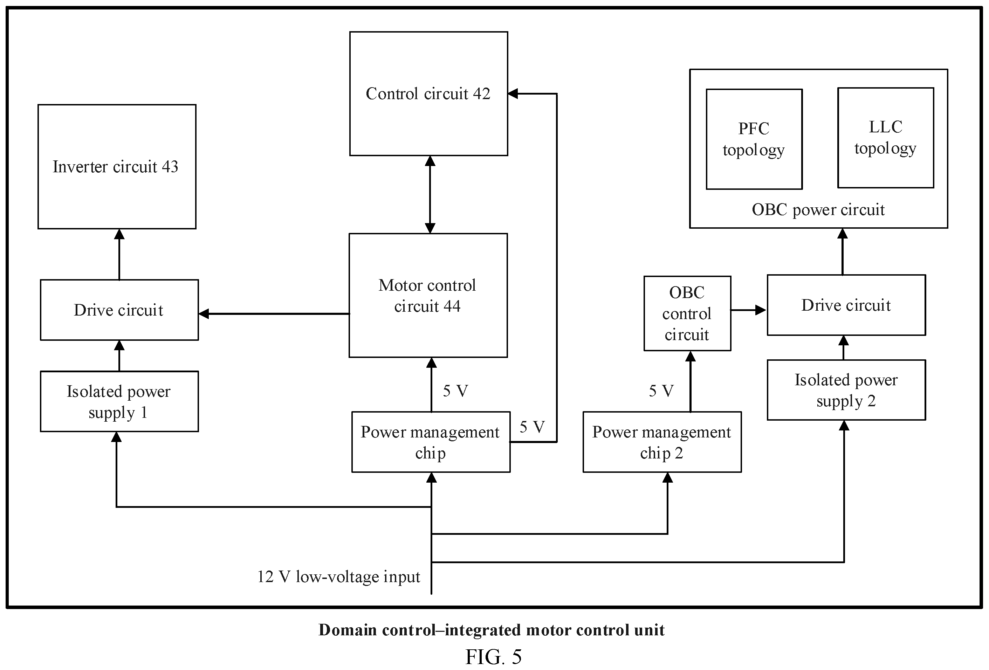

As shown in FIG. 5, in some embodiments, the motor control unit 40 further includes a motor control circuit 44 accommodated in the housing 41. The control circuit 42 is specifically configured to send a drive control signal to the motor control circuit 44 based on the accelerator pedal opening indicated by the accelerator pedal sensor, and the drive control signal indicates a magnitude and a frequency of the alternating current output by the inverter circuit to the drive motor 30. The motor control circuit 44 is configured to control, based on the drive control signal, the inverter circuit to output the alternating current to the drive motor. The drive control signal may be a torque instruction or a rotation speed instruction. This is not limited in this embodiment of this application.

In other words, the domain control-integrated motor control unit 40 provided in this embodiment of this application may include the independent control circuit 42 and the independent motor control circuit 44. The control circuit 42 is configured to receive a sensor signal in the electric vehicle 10 and is used as a computing center to control drive, braking, suspension, and the like. The motor control circuit 44 is used as an execution unit to receive the drive control signal output by the control circuit 42 and control torque of the drive motor by controlling the inverter circuit.

It may be understood that electrical components of the control circuit 42 and the motor control circuit 44 may be integrated into a same circuit board, or may be respectively disposed on different circuit boards. This is not limited in this embodiment of this application.

It may be understood that a separate motor control circuit 44 may not be disposed in the motor control unit 40, that is, the motor control circuit 44 may be integrated into the control circuit 42, so that the control circuit 42 may be used as the computing center and may also be used as an execution unit to directly control torque of the drive motor by controlling the inverter circuit.

According to this embodiment of this application, the control circuit 42 used as the computing center and the motor control circuit 44 used as a drive control execution unit are separately disposed. This can reduce a hardware requirement for the control circuit 42, and help reduce structural complexity of the control circuit 42.

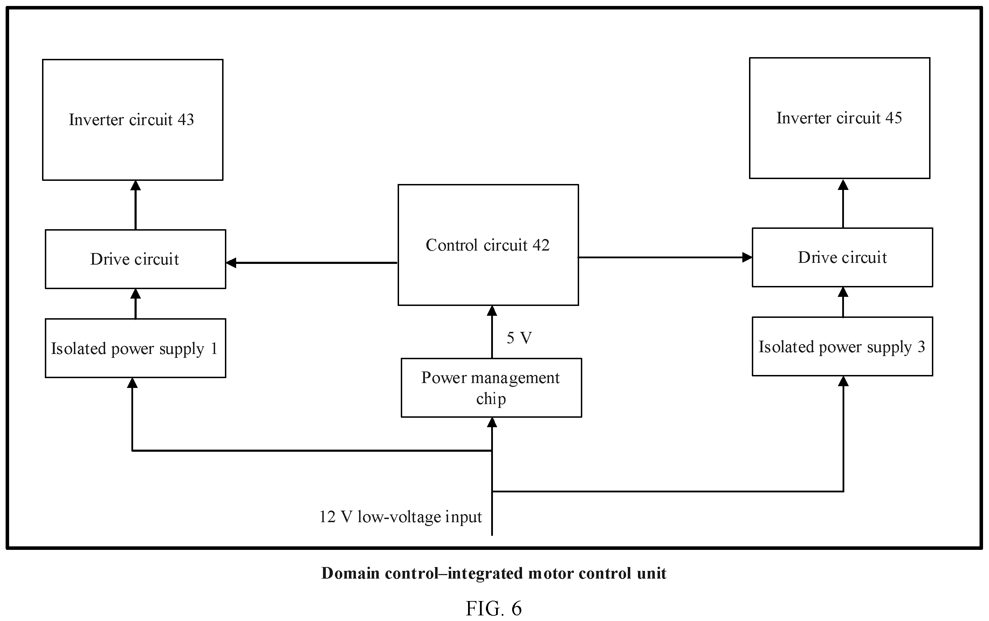

As shown in FIG. 6, in some embodiments, the motor control unit 40 further includes another inverter circuit 45. The another inverter circuit 45 is configured to receive, through the direct current input interface, power supplied by the power battery, and output an alternating current to another drive motor of the electric vehicle through the alternating current output interface. The drive motor 30 and the another drive motor are configured to drive two coaxial wheels of the electric vehicle 10. The control circuit 42 is further configured to control, based on the accelerator pedal opening indicated by the accelerator pedal sensor, the another inverter circuit 45 to output the alternating current to the another drive motor.

It may be understood that, for a drive system architecture with a distributed powertrain, the domain control-integrated motor control unit 40 may be a dual-motor control unit, and the control circuit 42 may drive, through two internal inverter circuits, two drive motors of the electric vehicle 10 respectively, to drive two front wheels or two rear wheels of the electric vehicle 10 to rotate. Specifically, the control circuit 42 may separately calculate, based on the accelerator pedal opening indicated by the accelerator pedal sensor, torque that needs to be output by the two drive motors, to separately control the two inverter circuits to respectively output alternating currents to the two drive motors. An electrical parameter of the alternating current output by the inverter circuit to the drive motor 30 may be the same as or different from an electrical parameter of the alternating current output by the another inverter circuit 45 to the another drive motor. This is not limited in this embodiment of this application.

In some embodiments, the accelerator pedal sensor interface is configured to receive at least two accelerator pedal signals from the accelerator pedal sensor, and the braking pedal sensor interface is configured to receive at least two braking pedal signals from the braking pedal sensor. It may be understood that the accelerator pedal sensor usually outputs two sensor signals, and the motor control unit 40 may receive the two output accelerator pedal signals. The braking pedal sensor also outputs two sensor signals, and the motor control unit 40 may receive the two output braking pedal signals.

In this application, a signal output by a sensor, for example, the accelerator pedal signal or the braking pedal signal, is a single edge nibble transmission (single edge nibble transmission, SENT) signal, an analog voltage signal, an analog current signal, or the like.

In some embodiments, the braking control interface is configured to connect to the four wheel-end braking apparatuses through at least two internal controller area network buses. The domain control-integrated motor control unit 40 is connected to each wheel-end braking apparatus through the at least two groups of internal CAN buses, and the internal CAN buses can be increased to three or four internal controller area network (Controller Area Network, CAN) buses based on an actual communication load rate. In another implementation, another high-speed communication manner may be used for a connection.

It may be understood that, when one CAN bus fails, another CAN bus may be used to maintain a connection between the motor control unit 40 and the actuator, and maintain control of the motor control unit 40 on the braking system 60.

In some embodiments, in response to the braking pedal opening being greater than zero and less than a preset opening, the control circuit 42 of the domain control-integrated motor control unit 40 is further configured to: control the drive motor 30 to stop outputting torque, and control, based on the braking pedal opening, the four wheel-end braking apparatuses to output braking forces to the four wheels. In response to the braking pedal opening being greater than the preset opening, the control circuit 42 of the domain control-integrated motor control unit 40 is further configured to: control, based on the braking pedal opening, the drive motor to output reverse torque, and control the four wheel-end braking apparatuses to output the braking forces to the four wheels, where a torque direction of the reverse torque is opposite to a rotation direction of the wheel.

The preset opening may be understood as a small braking pedal opening, and the braking pedal opening being less than the preset opening may be understood as that the driver has a low braking requirement for the electric vehicle 10. Therefore, when the opening of a braking pedal that the driver steps on is less than the preset opening, the control circuit 42 of the motor control unit 40 may control the drive motor 30 to stop outputting torque, and output the corresponding braking force based on the braking pedal opening, to implement quick braking of the electric vehicle 10.

The braking pedal opening being greater than the preset opening may be understood as that the driver has a high braking requirement for the electric vehicle 10. Therefore, when the opening of the braking pedal stepped by the driver is greater than the preset opening, when controlling the four wheel-end braking apparatuses to output the braking forces, the control circuit 42 of the motor control unit 40 may control the drive motor 30 to output the reverse torque to assist the braking system 60 in braking the wheels of the electric vehicle 10. Under a joint action of the reverse torque output by the drive motor and braking torque output by a corresponding wheel-end braking apparatus, braking forces that are of the wheels and that correspond to the braking pedal opening can be achieved quickly. It is easy to understand that the control circuit 42 may flexibly configure a value of the reverse torque output by the drive motor 30 and a proportion of the braking torque output by the wheel-end braking apparatus in total torque corresponding to the braking pedal opening. This is not limited in this embodiment of this application.

According to this embodiment of this application, the domain control-integrated motor control unit 40 may enable, through collaborative control on the drive system and the braking system, the electric vehicle 10 to quickly output the braking force corresponding to the braking pedal opening, thereby helping improve safety and handling performance of the electric vehicle 10.

In some embodiments, one of the four wheel-end braking apparatuses is further configured to connect to another braking pedal sensor of the electric vehicle. The control circuit 42 is further configured to receive at least two braking pedal signals from the another braking pedal sensor through the internal controller area network bus.

It may be understood that a plurality of sensors may be disposed on the braking pedal of the electric vehicle 10, and the plurality of sensors are divided into two groups. The motor control unit 40 receives braking pedal signals output by one group of braking pedal sensors, and the one wheel-end braking apparatus receives braking pedal signals output by the other group of braking pedal sensors. In this embodiment of this application, the control circuit 42 of the motor control unit 40 may further receive, through the internal controller area network bus between the control circuit 42 and the wheel-end braking apparatus, the braking pedal signals output by the other group of braking pedal sensors, so that even when the connected group of braking pedal sensors fail, the control circuit 42 can still obtain the braking pedal signal by using the other group of braking pedal sensors, to implement accurate braking control based on the braking pedal signal.

For example, braking pedal sensors 1 and 2 are in one group, and braking pedal sensors 3 and 4 are in one group. A braking pedal sensor signal 1 is (5 V power supply 1, sent signal 1, GND1); a braking pedal sensor signal 2 is (5 V power supply 2, sent signal 2, GND2); a braking pedal sensor signal 3 is (5 V power supply 3, sent signal 3, GND3); and a braking pedal sensor signal 4 is (5 V power supply 4, sent signal 4, GND4). Braking pedal sensor signals 1 and 2 are received by the motor control unit 40, and braking pedal sensor signals 3 and 4 are received by the one wheel-end braking apparatus.

It may be understood that the one wheel-end braking apparatus may be any one of the four wheel-end braking apparatuses, for example, a wheel-end braking apparatus 61 configured to brake a left front wheel of the electric vehicle 10.

It may be understood that, the control circuit 42 may receive, through the braking control interface, the at least two braking pedal signals transmitted by the internal controller area network bus from the another braking pedal sensor. Alternatively, a separate interface may be provided on the surface of the housing of the motor control unit 40, and the control circuit 42 may receive, through the separate interface, the at least two braking pedal signals transmitted by the internal controller area network bus from the another braking pedal sensor.

It may be understood that when receiving the at least two braking pedal signals from the another braking pedal sensor, the one wheel-end braking apparatus may directly output the received signals to the motor control unit 40, or may output the received signals to the motor control unit 40 in response to alarm information that is from the control circuit 42 and that indicates a failure of the braking sensor. This is not limited in this embodiment of this application.

According to this embodiment of this application, the electric vehicle 10 includes two braking pedal sensors that are backups for each other. In this way, the two braking pedal sensors can more accurately detect a motion status of the braking pedal. In addition, if one of the braking pedal sensors fails, the other braking pedal sensor can still independently detect the motion status of the braking pedal and transmit the motion status to the motor control unit 40, thereby ensuring normal operation of the braking system 60 and safety of the electric vehicle 10.

In some embodiments, in response to the motor control unit 40 being functional and the braking pedal sensor being functional, the control circuit 42 is configured to control, based on the braking pedal opening indicated by the braking pedal sensor, the four wheel-end braking apparatuses to brake the four wheels of the electric vehicle. In response to the motor control unit being functional, the braking pedal sensor failing, and the another braking pedal sensor being functional, the control circuit 42 is configured to: receive the braking pedal signal from the one wheel-end braking apparatus, and control, based on a braking pedal opening indicated by the braking pedal signal, the four wheel-end braking apparatuses to brake the four wheels of the electric vehicle.

It may be understood that, when the braking pedal sensor is functional, the control circuit 42 may control, based on the braking pedal signal received from the braking pedal sensor interface, the four wheel-end braking apparatuses to output the braking force corresponding to the braking pedal opening.

It may be understood that the failure of the braking pedal sensor includes a fault of the braking pedal sensor or a fault of transmitting a signal by the braking pedal sensor to the control circuit 42 of the motor control unit 40. When the braking pedal sensor fails, the control circuit 42 cannot obtain an accurate braking pedal signal. In this embodiment of this application, when the braking pedal sensor fails, because the control circuit 42 may receive, through the one wheel-end braking apparatus, the braking pedal signal from the another braking pedal sensor, the control circuit 42 can still control, based on the braking pedal opening indicated by the braking pedal signal, the four wheel-end braking apparatuses to output the braking force corresponding to the braking pedal opening.

In some embodiments, in response to failures of both the braking pedal sensor and the another braking pedal sensor and a decrease in the accelerator pedal opening indicated by the accelerator pedal sensor, the control circuit 42 is further configured to control the four wheel-end braking apparatuses to output the braking forces to the four wheels, where the braking forces increase as the accelerator pedal opening decreases.

It may be understood that, after both the braking pedal sensor and the another braking pedal sensor fail, if the accelerator pedal opening indicated by the accelerator pedal sensor decreases, it may be considered that the driver starts to release an acceleration pedal. In this case, the motor control unit 40 may control the four wheel-end braking apparatuses to output the braking forces, to assist the electric vehicle 10 in gradually decelerating until braking. That is, even if the braking pedal sensors of the electric vehicle 10 fail, the driver may control, by controlling the accelerator pedal, the four wheel-end braking apparatuses to brake the four wheels of the electric vehicle 10.

It may be understood that, after both the braking pedal sensor and the another braking pedal sensor fail, the control circuit 42 may further report alarm information to the vehicle control unit. The vehicle control unit may prompt the driver with a fault of the braking pedal through an in-vehicle display, the sound system, blinking of an atmosphere light, or the like, and display a preset animation on the in-vehicle display to guide the driver to slowly release the accelerator pedal to control the vehicle to brake, thereby ensuring driving safety.

Further, in some embodiments, in a decrease process of the accelerator pedal opening, if the accelerator pedal opening is greater than or equal to a preset opening, the motor control unit 40 can still control the drive motor to output torque. When the acceleration pedal opening decreases to less than the preset opening, the motor control unit 40 controls the drive motor to stop outputting torque and controls the four wheel-end braking apparatuses to output the braking forces. For example, the preset opening is 30%. A process in which the accelerator pedal opening decreases from greater than 30% to 0% is divided into two phases. When the accelerator pedal opening is greater than or equal to 30%, the motor control unit 40 can still control the drive motor to output the torque. When the accelerator pedal signal is less than 30%, the motor control unit 40 controls the drive motor to stop outputting torque and controls the four wheel-end braking apparatuses to output the braking forces. A smaller accelerator pedal signal indicates larger braking forces that the motor control unit 40 controls the four wheel-end braking apparatuses to output.

According to this embodiment of this application, in a scenario in which the braking pedal sensors configured for the electric vehicle 10 both fail, the motor control unit 40 provided in this embodiment of this application can still control, based on a decrease degree of the accelerator pedal opening, the four wheel-end apparatuses to output the braking forces, thereby avoiding a risk of a braking failure caused by failures of the braking pedal sensors, and improving safety and reliability of the electric vehicle 10.

In some embodiments, functions such as braking force requirement identification and braking force distribution may be set in the motor control unit 40 and the one wheel-end braking apparatus for redundancy implementation. In other words, a control function of the one wheel-end braking apparatus includes at least basic braking. Based on actual chip resources and costs, the control function of the one wheel-end braking apparatus may further include an antilock braking system (antilock braking system, ABS), a traction control system (traction control system, TCS), a vehicle dynamic control (vehicle dynamic control, VDC), or some functions.

In these embodiments, the motor control unit 40 may be used as a main control of the braking system 60, and the one wheel-end braking apparatus is used as redundancy of the main control. When the motor control unit 40 used as the main control is normal, the motor control unit 40 used as the main control is responsible for controlling, based on a braking pedal signal output by one braking pedal sensor or a braking pedal signal output by another braking pedal sensor, the four wheel-end braking apparatuses to output the braking forces. When the motor control unit 40 used as the main control fails, the one wheel-end braking apparatus used as a backup may continue to control, based on the braking pedal signal output by the another braking pedal sensor, the four wheel-end braking apparatuses to output the braking forces, thereby avoiding a failure of the entire braking system 60 caused by the failure, and helping improve safety and reliability of the braking system.

In some embodiments, in response to a failure of the accelerator pedal sensor, the control circuit 42 is further configured to control the four wheel-end braking apparatuses to output a preset braking force to the four wheels of the electric vehicle 10. The failure of the accelerator pedal sensor includes a fault of the accelerator pedal sensor or a fault of transmitting a signal by the accelerator pedal sensor to the control circuit 42 of the motor control unit 40. When the accelerator pedal sensor fails, the control circuit 42 cannot obtain an accurate accelerator pedal signal.

It may be understood that, if the accelerator pedal sensor fails in a traveling process of the electric vehicle 10, the control circuit 42 of the motor control unit 40 cannot obtain an accurate accelerator pedal opening and perform torque calculation and distribution based on the accurate accelerator pedal opening. Consequently, power output of the electric vehicle 10 is uncontrolled. In this case, to avoid a case in which the driver cannot perform a correct operation in time because driving confidence is interfered, the control circuit 42 actively controls the four wheel-end braking apparatuses to output the preset braking force, so that the electric vehicle slowly decelerates until braking, thereby ensuring traveling safety of the electric vehicle 10. The active control means that without controlling, based on a change of the braking pedal opening indicated by the braking pedal sensor, the four wheel-end braking apparatuses to output the braking forces, the control circuit 42 may control, in response to a failure of the accelerator pedal sensor, the four wheel-end braking apparatuses to output the braking forces.

It may be understood that a specific value of the preset braking force is not limited in this embodiment of this application. In addition, the control circuit 42 may further dynamically adjust, based on a vehicle speed of the electric vehicle 10 and wheel speeds of the four wheels, the braking forces output by the four wheel-end braking apparatuses.

According to this embodiment of this application, when detecting that the accelerator pedal sensor fails, the control circuit 42 may actively control the four wheel-end braking apparatuses to output the braking forces, to actively reduce the vehicle speed, thereby ensuring traveling safety of the electric vehicle.

In some embodiments, the surface of the housing of the domain control-integrated motor control unit 40 further includes a height sensor interface and a suspension control interface. The height sensor interface is configured to connect to the height sensor of the electric vehicle 10, and the suspension control interface is configured to connect to the suspension system 70 of the electric vehicle 10. The control circuit of the motor control unit 40 is further configured to control, based on a vehicle body height indicated by the height sensor, the suspension system 70 to adjust suspension damping. In these embodiments, the motor control unit 40 may further be connected to the height sensor of the electric vehicle 10 through the height sensor interface on the surface of the housing 41, so that the control circuit 42 in the domain control-integrated motor control unit 40 may transmit, through the height sensor interface and through the internal line, a height signal from the height sensor, and the height signal indicates the vehicle body height. Further, the control circuit 42 may output, through the suspension control interface, a suspension control instruction generated based on the height signal, for example, a lifting force instruction, to control the suspension system 70 to adjust the suspension damping.

The suspension system 70 is configured to connect a vehicle body of the electric vehicle 10 to the wheels, and provide support, buffering, and stability in a traveling process of the electric vehicle 10. The suspension system 70 includes a shock absorber. Each wheel is separately connected to the vehicle body of the electric vehicle 10 through the shock absorber. In this embodiment of this application, for the suspension system 70 with an adjustable damping shock absorber, the motor control unit 40 sends a target damping coefficient or a target damping level to the suspension system 70, to adjust damping of each shock absorber. The suspension system 70 includes an air suspension or a fully active suspension. The motor control unit 40 sends a target wheel suspension height to the suspension system 70, to adjust a suspension height at the wheel of the electric vehicle 10.

In some embodiments, the domain control-integrated motor control unit 40 is configured to connect to a suspension controller of the electric vehicle 10 through the suspension control interface. The control circuit 42 is configured to send a suspension signal to the suspension controller, and the suspension signal indicates the suspension controller to drive a suspension actuator to adjust the suspension damping. In other words, the motor control unit 40 is configured to control an independent suspension controller 20 through the suspension control interface, and the suspension controller 20 is configured to drive the suspension actuator to adjust the suspension damping. For a suspension actuator in a form of a CDC, an air spring, or an active suspension oil pump actuator, the domain control-integrated motor control unit 40 controls an independent suspension drive board by using the suspension signal. The suspension controller 20 sends PWM solenoid valve drive to the CDC, or sends PWM solenoid valve drive to the air spring, or sends a control instruction to the oil pump actuator according to a communication instruction, to adjust the suspension damping.

In some embodiments, the domain control-integrated motor control unit 40 is configured to connect to the suspension actuator through the suspension control interface, so that the control circuit 42 of the motor control unit 40 may directly control, through the suspension control interface, the suspension actuator to adjust the suspension damping. In these embodiments, the domain control-integrated motor control unit 40 includes a suspension drive circuit. A domain control-integrated controller 20 may directly send PWM solenoid valve drive to the CDC, or send PWM solenoid valve drive to the air spring, or send a control instruction to the oil pump actuator according to a communication instruction, to adjust the suspension damping.

In some embodiments, the surface of the housing of the domain control-integrated motor control unit 40 further includes a steering control interface, and the steering control interface is configured to connect to a rear-wheel steering system of the electric vehicle 10. The control circuit 42 is further configured to control, through the steering control interface, the rear-wheel steering system to adjust a steering angle of the rear wheel of the electric vehicle 10. Specifically, the control circuit 42 may send a steering angle instruction and a steering angular velocity instruction to the rear-wheel steering system through the steering control interface, so that the rear-wheel steering system controls the rear wheel to adjust, at a speed instructed by the steering angular velocity instruction, the rear wheel to rotate by an angle instructed by the steering angle instruction. In cooperation with control on drive, braking and suspension, control on rear-wheel steering is integrated together. This can improve control performance and comfort of the electric vehicle 10 more effectively.

In some embodiments, the surface of the housing of the domain control-integrated motor control unit 40 further includes a parking switch interface, and the motor control unit 40 is configured to connect to an electronic parking braking system switch of the electric vehicle 10 through the parking switch interface. The electronic parking braking system switch is configured to control an electronic parking system of the electric vehicle 10, and the driver may perform parking braking by using the electronic parking braking system switch. The surface of the housing of the domain control-integrated motor control unit 40 further includes a parking control interface. The parking control interface is configured to connect to the electronic parking braking system of the electric vehicle 10. The control circuit 42 is configured to control, through the parking control interface, the electronic parking braking system of the electric vehicle 10 to output a parking braking force.

The electronic parking braking system switch is configured to control the electronic parking system of the electric vehicle 10, and the driver may perform parking braking by using the electronic parking braking system switch. When the electronic parking braking system switch indicates that the electric vehicle 10 needs to be parked, the control circuit 42 controls the electronic parking braking system to output the parking braking force.

In an embodiment, the surface of the housing of the domain control-integrated motor control unit 40 further includes a wheel speed sensor interface, the wheel speed sensor interface is configured to receive a wheel speed signal from a wheel speed sensor, and the wheel speed signal indicates a rotation speed of the wheel of the electric vehicle 10.

The surface of the housing of the domain control-integrated motor control unit 40 includes the wheel speed sensor interface. The control circuit 42 is configured to connect to the wheel speed sensor through the wheel speed sensor interface, to receive wheel speed signals from a plurality of wheel speed sensors through the wheel speed sensor interface. The wheel speed signals indicate a rotation speed of each wheel of the electric vehicle 10, so that the control circuit 42 can control, based on rotation speeds of the wheels indicated by the wheel speed signals, the torque output by the drive motor of the electric vehicle 10 and the braking forces output by the wheel-end braking apparatuses.

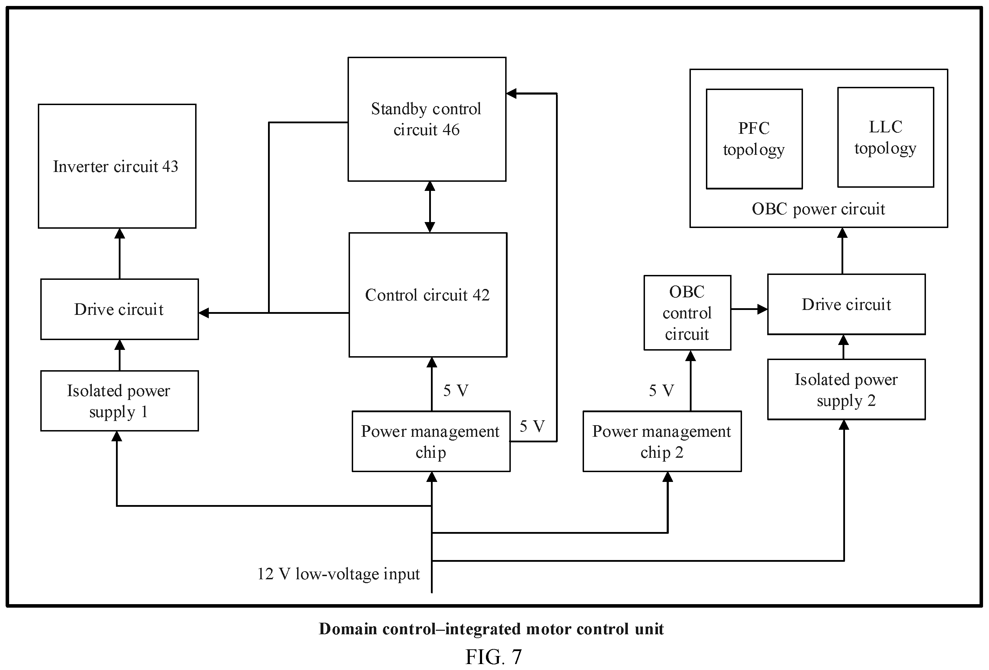

As shown in FIG. 7, in some embodiments, the motor control unit 40 further includes a standby control circuit 46 accommodated in the housing 41. When the control circuit 42 fails, the standby control circuit 46 may replace the control circuit 42 to perform at least one of the following: controlling the inverter circuit 43 to output the alternating current to the drive motor 30, controlling the four wheel-end braking apparatuses to brake the four wheels of the electric vehicle, controlling the suspension system 70 of the electric vehicle to adjust the suspension damping, or controlling the rear-wheel steering system of the electric vehicle to adjust the steering angle of the rear wheel of the electric vehicle.

That is, one control circuit 42 used as a main control and one standby control circuit 46 used as a standby control may be disposed in the domain control-integrated motor control unit 40. When the control circuit 42 is functional, the control circuit 42 may control the drive system 20, the braking system 60, the rear-wheel steering system, and the suspension system 70 of the electric vehicle 10 based on received sensor signals. When the control circuit 42 fails, the standby control circuit 46 may take over the control circuit 42 to send a control instruction to a lower-layer actuator, for example, send a torque instruction or a rotation speed instruction to the drive system 20, send a clamping force instruction or a braking force instruction to the braking system 60, send a steering angle instruction and a steering speed instruction to the rear-wheel steering system, and send a lifting force instruction to the suspension system 70. For a specific manner of performing calculation and control by the standby control circuit 46, refer to related content of the control circuit 42. Details are not described herein again.

In these embodiments, the standby control circuit 46 is connected to at least the braking pedal sensor, so that when the control circuit 42 is faulty, the standby control circuit 46 can control the braking system 60 to operate normally, thereby ensuring safety of the electric vehicle 10. Further, based on actual chip resources and costs, the standby control circuit 46 may further be connected to one or more of the following: the accelerator pedal sensor, a vehicle body acceleration sensor, the height sensor, and the wheel speed sensor, to control the drive motor 30, the suspension system 70, the rear-wheel steering system, and the like in the electric vehicle 10. It is easy to understand that when sufficient chip resources are distributed to the standby control circuit 46, the standby control circuit 46 may implement full redundancy for the control circuit 42, resulting in higher safety of the electric vehicle 10.

According to the solution of this application, the standby control circuit 46 may be used as hardware redundancy of the control circuit 42. When the control circuit 42 is faulty, the standby control circuit 46 takes over control, and sends a control instruction to the actuator, to help further improve safety of the vehicle.

In some embodiments, the standby control circuit 46 is further configured to connect to the braking pedal sensor interface through an internal line, to receive at least two braking pedal signals from the another braking pedal sensor of the electric vehicle 10 through the braking pedal sensor interface.

It may be understood that the standby control circuit 46 may receive, through the braking pedal sensor interface, the at least two braking pedal signals from the another braking pedal sensor. Alternatively, a separate interface may be provided on the surface of the housing 41, and the standby control circuit 46 may receive, through the separate interface, the at least two braking pedal signals from the another braking pedal sensor.

According to the solution of this application, the electric vehicle includes the two braking pedal sensors that are backups for each other. In this way, the two braking pedal sensors can more accurately detect the motion status of the braking pedal. In addition, if one of the braking pedal sensors fails, the other braking pedal sensor can still independently detect the motion status of the braking pedal and transmit the motion status to the control circuit in the motor control unit, thereby ensuring normal operation of the braking system and safety of the electric vehicle.

In some embodiments, the control circuit 42 is further configured to connect to the standby control circuit 46 through at least two internal lines, to exchange a signal from a sensor of the electric vehicle 10 with the control circuit 42 through the at least two internal lines.

The signals from the sensors of the electric vehicle 10 that are exchanged between the control circuit 42 and the standby control circuit 46 include some or all signals from the accelerator pedal sensor, the braking pedal sensor, the vehicle body acceleration sensor, the height sensor, and the wheel speed sensor.

It may be understood that the control circuit 42 and the standby control circuit 46 may receive the signals from the sensors of the electric vehicle 10 through a same link, or may receive the signals from the sensors of the electric vehicle 10 through different links. For example, for the control circuit 42 and the standby control circuit 46 that are integrated into a same PCB, the control circuit 42 and the standby control circuit 46 may be connected to the accelerator pedal sensor interface on the surface of the housing 41 through a same accelerator pedal sensor terminal on the PCB, to receive signals from the accelerator pedal sensor; or may be connected to the accelerator pedal sensor interface on the surface of the housing 41 through different accelerator pedal sensor terminals on the PCB, to receive signals from the accelerator pedal sensor. For another example, the control circuit 42 and the standby control circuit 46 may be integrated into different PCBs, to separately connect to the accelerator pedal sensor interface on the surface of the housing 41, to receive signals from the accelerator pedal sensor. For another example, the surface of the housing 41 further includes another accelerator pedal sensor interface. The standby control circuit 46 may receive an accelerator pedal signal through the another accelerator pedal sensor interface. That is, the plurality of sensor interfaces 413 may include two accelerator pedal sensor interfaces, and the control circuit 42 and the standby control circuit 46 may respectively receive accelerator pedal signals through the two accelerator pedal sensor interfaces.

It may be understood that one or more sensors of a same type may be disposed in the electric vehicle 10. The control circuit 42 and the standby control circuit 46 may receive signals from a same sensor of a same type, or may receive signals from a same type but different sensors. For example, one accelerator pedal sensor is disposed in the electric vehicle 10, and both the control circuit 42 and the standby control circuit 46 receive two accelerator pedal signals output by the one accelerator pedal sensor. For another example, two braking pedal sensors are disposed in the electric vehicle 10. The control circuit 42 may receive two braking pedal signals provided by one of the braking pedal sensors, and the standby control circuit 46 receives another two braking pedal signals provided by the other braking pedal sensor. For another example, two height sensors are disposed in the electric vehicle 10. The control circuit 42 may receive one height signal output by one height sensor, and the standby control circuit 46 may receive another height signal output by the other height sensor.

It may be understood that the standby control circuit 46 may alternatively not be connected to a sensor, but receives, through the control circuit 42, a signal from each sensor of the electric vehicle 10. Specifically, after receiving a sensor signal, the control circuit 42 may transmit the sensor signal to the standby control circuit 46, so that the standby control circuit 46 may obtain one or more sensor signals. In this way, the standby control circuit 46 does not need to be connected to the plurality of sensor interfaces 413 on the surface of the housing 41 through an additional line. This helps reduce structural complexity.

It may be understood that a specific manner of signal exchange between the control circuit 42 and the standby control circuit 46 is not limited in this embodiment of this application. The control circuit 42 and the standby control circuit 46 may be integrated into a same PCB. In this case, the control circuit 42 may perform signal exchange with the standby control circuit 46 through a metal wire, a via, optical transmission, or the like on the PCB. For another example, the control circuit 42 and the standby control circuit 46 may be disposed on different PCBs. In this case, the control circuit 42 and the standby control circuit 46 may perform signal exchange through a flat cable connected to two PCBs, or perform signal exchange through a wireless communication module on the PCB.

According to the solution of this application, the control circuit and the standby control circuit may exchange, through the internal line, received sensor signals of the vehicle, so that the sensor signals received by the control circuit and the standby control circuit are backups for each other, thereby improving reliability and accuracy of control performed by the motor control unit.

In some embodiments, in response to the control circuit 42 being functional and the braking pedal sensor being functional, the control circuit 42 is configured to control, based on the braking pedal opening indicated by the braking pedal sensor, the four wheel-end braking apparatuses to brake the four wheels of the electric vehicle. In response to the control circuit 42 being functional, the braking pedal sensor failing, and the another braking pedal sensor being functional, the control circuit 42 is configured to: receive a braking pedal signal from the standby control circuit 46, and control, based on a braking pedal opening indicated by the braking pedal signal, the four wheel-end braking apparatuses to brake the four wheels of the electric vehicle.

It may be understood that, when the braking pedal sensor is functional, the control circuit 42 may control, based on the braking pedal signal received from the braking pedal sensor interface, the four wheel-end braking apparatuses to output the braking force corresponding to the braking pedal opening.

The failure of the braking pedal sensor includes a fault of the braking pedal sensor or a fault of transmitting a signal by the braking pedal sensor to the control circuit 42. In this case, the control circuit 42 cannot obtain an accurate braking pedal signal.

It may be understood that, when the braking pedal sensor fails, because the internal line between the control circuit 42 and the standby control circuit 46 may receive the braking pedal signal from the another braking pedal sensor, even when a connected group of braking pedal sensors fail, the control circuit 42 can still obtain the braking pedal signal by using the other group of braking pedal sensors, to implement accurate braking control based on the braking pedal signal.

In some embodiments, the domain control-integrated motor control unit 40 further includes a standby domain control-integrated motor control unit (hereinafter referred to as a standby motor control unit). The standby motor control unit is configured to connect to the motor control unit 40 through at least two internal controller area network buses. The standby motor control unit is configured to: when the motor control unit 40 fails, replace the motor control unit 40 to control the drive system 20, the braking system 60, the suspension system 70, and the steering system.

The domain control-integrated motor control unit 40 is connected to the accelerator pedal sensor, the braking pedal sensor, the vehicle body acceleration sensor, the height sensor, and the wheel speed sensor. The standby controller is connected to at least the braking pedal sensor. As a computing center, the motor control unit 40 integrates control on the drive system 20, the braking system 60, the rear-wheel steering system, and the suspension system 70. When the motor control unit 40 is faulty, the standby controller takes over control, and sends a control instruction to a lower-layer actuator.

It may be understood that the domain control-integrated motor control unit and the standby controller may be any two motor control units in the electric vehicle 10. For example, for the electric vehicle 10 shown in (a) in FIG. 2, the domain control-integrated motor control unit may be the motor control unit 401, and the standby controller may be the motor control unit 402. For example, for the electric vehicle 10 shown in (b) in FIG. 2, the domain control-integrated motor control unit may be the motor control unit 402, and the standby controller may be the motor control unit 404. For example, for the electric vehicle 10 shown in (c) in FIG. 2, the domain control-integrated motor control unit may be the motor control unit 403, and the standby controller may be the motor control unit 401.

According to the solution of this application, the standby controller is used as hardware redundancy of the domain control-integrated motor control unit 40. When the motor control unit 40 is faulty, the standby controller takes over control, and sends a control instruction to the actuator, to help further improve safety of the vehicle.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A domain control-integrated motor control unit, wherein the motor control unit is configured to control operation of an electric vehicle based on signals from a plurality of sensors of the electric vehicle, and the motor control unit comprises a housing and an inverter circuit and a control circuit that are accommodated in the housing;
a surface of the housing comprises a direct current input interface, an alternating current output interface, an accelerator pedal sensor interface, a braking pedal sensor interface, and a braking control interface, the direct current input interface is configured to connect to a power battery of the electric vehicle, the alternating current output interface is configured to connect to a drive motor of the electric vehicle, the accelerator pedal sensor interface is configured to connect to an accelerator pedal sensor of the electric vehicle, the braking pedal sensor interface is configured to connect to a braking pedal sensor of the electric vehicle, and the braking control interface is configured to connect to four wheel-end braking apparatuses;
the inverter circuit is configured to: receive, through the direct current input interface, a direct current output by the power battery, and output an alternating current to the drive motor through the alternating current output interface; and
the control circuit is configured to: receive, from the accelerator pedal sensor interface through an internal line, an accelerator pedal signal from the accelerator pedal sensor, and control, based on an accelerator pedal opening indicated by the accelerator pedal signal, the inverter circuit to output the alternating current to the drive motor, and the control circuit is further configured to: receive, from the braking pedal sensor interface through the internal line, a braking pedal signal from the braking pedal sensor, and control, based on a braking pedal opening indicated by the braking pedal signal, the four wheel-end braking apparatuses to brake four wheels of the electric vehicle.

2. The motor control unit according to claim 1, wherein the braking control interface is configured to connect to the four wheel-end braking apparatuses through at least two internal controller area network buses.

3. The motor control unit according to claim 1 or 2, wherein the accelerator pedal sensor interface is configured to receive at least two accelerator pedal signals from the accelerator pedal sensor, and the braking pedal sensor interface is configured to receive at least two braking pedal signals from the braking pedal sensor.

4. The motor control unit according to any one of claims 1 to 3, wherein the surface of the housing further comprises a height sensor interface and a suspension control interface, the height sensor interface is configured to connect to a height sensor of the electric vehicle, and the suspension control interface is configured to connect to a suspension system of the electric vehicle; and
the control circuit is further configured to control, based on a vehicle body height indicated by the height sensor, the suspension system to adjust suspension damping.

5. The motor control unit according to any one of claims 1 to 4, wherein the surface of the housing further comprises a steering control interface, and the steering control interface is configured to connect to a rear-wheel steering system of the electric vehicle; and
the control circuit is further configured to control, through the steering control interface, the rear-wheel steering system to adjust a steering angle of a rear wheel of the electric vehicle.

6. The motor control unit according to any one of claims 1 to 5, wherein the motor control unit further comprises a standby control circuit accommodated in the housing, and the standby control circuit is configured to: when the control circuit fails, replace the control circuit to perform at least one of the following:
controlling the inverter circuit to output the alternating current to the drive motor, controlling the four wheel-end braking apparatuses to brake the four wheels of the electric vehicle, controlling the suspension system of the electric vehicle to adjust the suspension damping, or controlling the rear-wheel steering system of the electric vehicle to adjust the steering angle of the rear wheel of the electric vehicle.

7. The motor control unit according to claim 6, wherein the standby control circuit is further configured to connect to the control circuit through at least two internal lines, to exchange a signal from a sensor of the electric vehicle with the control circuit through the at least two internal lines.

8. The motor control unit according to claim 6 or 7, wherein the standby control circuit is further configured to connect to the braking pedal sensor interface through an internal line, to receive at least two braking pedal signals from another braking pedal sensor of the electric vehicle through the braking pedal sensor interface.

9. The motor control unit according to claim 8, wherein the control circuit is further configured to:
in response to the control circuit being functional and the braking pedal sensor being functional, control, based on the braking pedal opening indicated by the braking pedal sensor, the four wheel-end braking apparatuses to brake the four wheels of the electric vehicle; or
in response to the control circuit being functional, the braking pedal sensor failing, and the another braking pedal sensor being functional, receive a braking pedal signal from the standby control circuit, and control, based on a braking pedal opening indicated by the braking pedal signal, the four wheel-end braking apparatuses to brake the four wheels of the electric vehicle.

10. The motor control unit according to any one of claims 7 to 9, wherein the control circuit is further configured to:
in response to failures of both the braking pedal sensor and the another braking pedal sensor and a decrease in the accelerator pedal opening indicated by the accelerator pedal sensor, control the four wheel-end braking apparatuses to output braking forces to the four wheels, wherein the braking forces increase as the accelerator pedal opening decreases.

11. The motor control unit according to any one of claims 1 to 10, wherein the control circuit is further configured to:
in response to the braking pedal opening being greater than zero and less than a preset opening, control the drive motor to stop outputting torque, and control, based on the braking pedal opening , the four wheel-end braking apparatuses to output the braking forces to the four wheels; or
in response to the braking pedal opening being greater than the preset opening, control, based on the braking pedal opening, the drive motor to output reverse torque, and control the four wheel-end braking apparatuses to output the braking forces to the four wheels, wherein a torque direction of the reverse torque is opposite to a rotation direction of the wheel.

12. The motor control unit according to any one of claims 1 to 11, wherein the motor control unit further comprises a motor control circuit accommodated in the housing;
the control circuit is specifically configured to send a drive control signal to the motor control circuit based on the accelerator pedal opening indicated by the accelerator pedal sensor, and the drive control signal indicates a magnitude and a frequency of the alternating current; and
the motor control circuit is configured to control, based on the drive control signal, the inverter circuit to output the alternating current to the drive motor.

13. The motor control unit according to any one of claims 1 to 12, wherein the motor control unit further comprises another inverter circuit, the another inverter circuit is configured to: receive, through the direct current input interface, power supplied by the power battery, and output an alternating current to another drive motor of the electric vehicle through the alternating current output interface, and the drive motor and the another drive motor are configured to drive two coaxial wheels of the electric vehicle; and
the control circuit is further configured to control, based on the accelerator pedal opening indicated by the accelerator pedal sensor, the another inverter circuit to output the alternating current to the another drive motor.

14. A powertrain, wherein the powertrain comprises a drive motor and the motor control unit according to any one of claims 1 to 13, and the motor control unit is configured to: receive power supplied by a power battery and supply power to the drive motor to drive the drive motor.

15. An electric vehicle, wherein the electric vehicle comprises four wheels, four wheel-end braking apparatuses, and the powertrain according to claim 14, and the powertrain according to claim 14 is configured to: drive one or more of the wheels to rotate, and control the four wheel-end braking apparatuses to output braking forces to the four wheels;
wherein one of the four wheel-end braking apparatuses is further configured to connect to another braking pedal sensor of the electric vehicle, and the one wheel-end braking apparatus is further configured to:
in response to a failure of the motor control unit in the powertrain, control, based on a braking pedal opening indicated by the another braking pedal sensor, the four wheel-end braking apparatuses to brake the four wheels of the electric vehicle.
